# EUROPEAN PATENT SPECIFICATION

(11) **EP 3 072 916 B1**
(45) Date of publication and mention of the grant of the patent: **24.01.2024**
(21) Application number: 14862269.9
(22) Date of filing: 05.11.2014
(51) Int. Cl.: B32B 15/14, B32B 15/20, B29C 45/00, C23C 18/20, C23C 18/16

(54) **METHOD FOR PRODUCING RESIN MOLDED ARTICLE**
VERFAHREN ZUR HERSTELLUNG VON HARZFORMTEILEN
PROCÉDÉ DE PRODUCTION D'UN ARTICLE MOULÉ EN RÉSINE

(30) Priority: 18.11.2013 JP 2013237613
(43) Date of publication of application: 28.09.2016
(73) Proprietor: Mitsubishi Engineering-Plastics Corporation, Tokyo 105-0021 (JP)
(72) Inventor: MORIMOTO Kei, Hiratsuka-shi Kanagawa 254-0016 (JP); TAMURA Masaki, Hiratsuka-shi Kanagawa 254-0016 (JP); TAKANO Takahiro, Hiratsuka-shi Kanagawa 254-0016 (JP); YAMADA Ryusuke, Hiratsuka-shi Kanagawa 254-0016 (JP)
(74) Representative: IPecunia
(86) International application number: PCT/JP2014/079288
(87) International publication number: WO 2015/072373

(56) References cited:
- WO-A1-2012/128219
- WO-A1-2013/098421
- CN-A- 102 931 471
- JP-A- 2010 253 938
- JP-A- 2013 144 767
- JP-B1- 5 340 513

## Description

### TECHNICAL FIELD

The present invention relates to processes for manufacturing resin molded articles, which allow for the use of the laser direct structuring (hereinafter sometimes referred to as "LDS") technology, whereby the surfaces of the resin molded articles can be directly plated.

### BACKGROUND ART

With recent development of cell phones including smartphones, various processes for manufacturing antennas inside the cell phones have been proposed. Especially, it would be desirable to provide a process for manufacturing an antenna that can be three-dimensionally designed in a cell phone. The LDS technology has drawn attention as one of technologies for forming such three-dimensional antennas. The LDS technology refers to a technology for forming a plated layer by, for example, irradiating the surface of a resin molded article containing an LDS additive with a laser beam to activate only the region irradiated with the laser beam and applying a metal on the activated region. This technology is characterized in that metal structures such as antennas can be directly manufactured on the surfaces of resin substrates without using any adhesives or the like. The LDS technology is disclosed in, for example, patent documents 1 to 4. Patent document 5 relates to a medical injection device incorporating a dose sensing device and a method of providing such dose sensor. Patent document 6 relates to a method for manufacturing integrated molding. Patent document 7 relates to mobile terminal case and antenna integrated manufacture method.

### REFERENCES

### PATENT DOCUMENTS

Patent document 1: JPA2000-503817
Patent document 2: JPA2004-534408
Patent document 3: International Publication WO2009/141800
Patent document 4: International Publication WO2012/128219
Patent document 5: International Publication WO2013/098421
Patent document 6: JP 2010 253938
Patent document 7: CN 102931471

### SUMMARY OF THE INVENTION

### PROBLEMS TO BE SOLVED BY THE INVENTION

On the other hand, metal plates have been incorporated into resin molded articles to maintain the rigidity of the resin molded articles. However, it is difficult to use metal plates for applications such as antennas because of their high shielding properties.

The present invention aims to solve such problems, thus providing processes for manufacturing resin molded articles having high mechanical strength and low shielding properties that can be directly plated on their surfaces.

### MEANS TO SOLVE THE PROBLEMS

As a result of our careful studies to overcome the problems described above, we succeeded in directly plating the surfaces of resin molded articles having high mechanical strength and low shielding properties by using a sheet which contains a thermoplastic resin and a fiber in combination with a composition which contains a thermoplastic resin belonging to a similar type to a type of the thermoplastic resin of the sheet, and an LDS additive.

Specifically, the above problems were solved by the invention as defined in claims 1 to 9.

### ADVANTAGES OF THE INVENTION

The present invention made it possible to directly plate a surface of resin molded articles having high mechanical strength and low shielding properties.

### BRIEF EXPLANATION OF THE DRAWINGS

Figure 1 shows an example of a conceptual diagram of a resin molded article according to the present invention.
Figure 2 is a schematic diagram showing a process for plating the surface of a resin molded article.

### THE MOST PREFERRED EMBODIMENTS OF THE INVENTION

The present invention will be explained in detail below. As used herein, each numerical range expressed by two values on both sides of "to" is used to mean the range including the values indicated before and after "to" as lower and upper limits.

The manufacturing processes of the present invention are characterized in that they comprise thermally molding a sheet containing a thermoplastic resin and a fiber (hereinafter sometimes referred to as a "fiber-reinforced resin sheet") together with a composition which contains a thermoplastic resin belonging to a similar type to a type of the thermoplastic resin of the sheet and a laser direct structuring additive (hereinafter sometimes referred to as a "resin composition for LDS") .

Resin molded articles having high mechanical strength can be obtained by using the fiber-reinforced resin sheet. Moreover, they also have favorable shielding properties because no metal plate is incorporated according to the present invention. Further, the fiber-reinforced resin sheet and the resin composition for LDS can be more strongly adhered to each other because resins belonging to the similar type are used in the fiber-reinforced resin sheet and the resin composition for LDS. In addition, the present invention allows the LDS additive to be present only on and around the surface of the resin molded article rather than throughout the resin molded article because the fiber-reinforced resin sheet is thermally molded with the resin composition for LDS. As a result, a good plated layer can be formed even if the LDS additive is contained in small amounts.

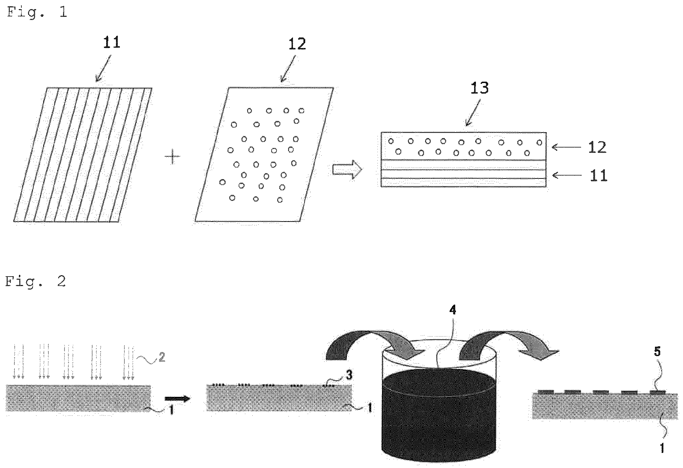

Figure 1 shows an example of a conceptual drawing of a resin molded article according to the present invention, wherein 11 and 12 designate a fiber-reinforced resin sheet and a film formed of a resin composition for LDS, respectively. Further, 13 designates a resin molded article obtained after the fiber-reinforced resin sheet have been thermally molded with the film formed of a resin composition for LDS, in which the sheet and the film are shown in section. In Figure 1, the boundary between the fiber-reinforced resin sheet 11 and the film 12 formed of a resin composition for LDS in the resin molded article 13 is distinct, but the boundary may not always be distinct after they have been thermally molded. In the resulting resin molded article 13, the side comprising the fiber-reinforced resin sheet 11 contributes to maintaining high mechanical strength, while the side comprising the film 12 formed of a resin composition for LDS can be suitably plated because it is rich in an LDS additive. Such a structure allows the resin molded article to be suitably plated even if the amount of the LDS additive contained therein is relatively small. Further, the LDS additive per se acts as an impurity in the resin composition to cause a loss in mechanical strength or the like, but the loss in mechanical strength or the like can be reduced more effectively in the present invention because the proportion of the LDS additive to the resin molded article is relatively low.

Alternatively, a resin molded article according to the present invention may have a structure wherein a fiber-reinforced resin sheet is sandwiched between two films formed of a resin composition for LDS in Figure 1 described above.

As another alternative, it may have a structure wherein a fiber-reinforced sheet is sandwiched between a film formed of a resin composition for LDS and a film formed of another functional resin composition in Figure 1 described above. An example of another functional resin composition includes, for example, a flame retardant resin composition containing a flame retardant in place of the LDS additive in the resin composition for LDS.

Further, a flame retardant or the like may be incorporated into the film formed of a resin composition for LDS to confer a further function on it without departing from the scope of the present invention.

It should be understood that the manufacturing processes according to the present invention are not limited to Figure 1 described above. Details of these processes will be described herein later.

### <Fiber-reinforced resin sheet>

The fiber-reinforced resin sheet used in the present invention comprises a thermoplastic resin and a fiber. The mechanical strength of the resin molded article may be increased by using such a fiber-reinforced resin sheet. Especially, the present invention is advantageous in that the fiber-reinforced resin sheet is substantially free from an LDS additive, containing an LDS additive in an amount of 0.1 % by weight or less of the sheet. Specifically, LDS additives are useful for forming plated layers, but higher amounts of LDS additives may have an adverse influence on mechanical strength. According to the present invention, good mechanical strength can be achieved because the fiber-reinforced resin sheet may be free from an LDS additive. Moreover, shielding properties are also favorable because the present invention is also possible to be a construction which is substantially free from a metal as a result of the elimination of a metal plate or the like.

### «Thermoplastic resin»

The thermoplastic resin used in the present invention is selected from polyamide resins, polyester resins, polyolefin resins, polypropylene resins, polyethylene resins and acrylic resins. Among them, polyester resins and polyamide resins are preferred. These may be used alone or as a combination of two or more of them.

Information about polyester resins may be found in the description at paragraphs 0013 to 0016 of JPA2010-174223.

Information about polyamide resins may be found in the description at paragraphs 0011 to 0013 of JPA2011-132550. A preferred polyamide resin is a polyamide resin comprising a diamine structural unit (a structural unit derived from a diamine), 50 mol % or more of which is derived from xylylenediamine, i.e., a xylylenediamine-based polyamide resin comprising a diamine, 50 mol % or more of which is derived from xylylenediamine, and which has been polycondensed with a dicarboxylic acid.

It is a xylylenediamine-based polyamide resin comprising a diamine structural unit, preferably 70 mol % or more, more preferably 80 mol % or more of which is derived from m-xylylenediamine and/or p-xylylenediamine, and a dicarboxylic acid structural unit (a structural unit derived from a dicarboxylic acid) , preferably 50 mol % or more, more preferably 70 mol % or more, especially preferably 80 mol % or more of which is derived from a straight chain aliphatic α,ω-dicarboxylic acid preferably containing 4 to 20 carbon atoms. Straight-chain aliphatic α,ω-dibasic acids containing 4 to 20 carbon atoms that may be preferably used include adipic acid, sebacic acid, suberic acid, dodecanedioic acid, eicosadienoic acid and the like.

In the present invention, especially preferred is a polyamide resin containing an aromatic ring in its molecule wherein the proportion of the carbon atoms of the aromatic ring in the molecule of the polyamide resin is 30 mol% or more. When such a resin is employed, the water absorption rate decreases with the result that dimensional changes due to moisture absorption may be reduced more effectively.

Further, the polyamide resin should contain 0.5 to 5 % by mass of components having a molecular weight of 1,000 or less. When it contains such low molecular weight components in such a range, the impregnation with the polyamide resin improves and therefore, the flowability of the polyamide resin between fibers improves to reduce voids during molding. Consequently, the resulting molded article has more improved strength and low warpage. When the content of these low-molecular weight components is 5 % by mass or less, they are less likely to bleed out and surface appearance tends to improve.

The content of components having a molecular weight of 1,000 or less is preferably 0.6 to 4.5 % by mass, more preferably 0.7 to 4 % by mass, even more preferably 0.8 to 3.5 % by mass, especially preferably 0.9 to 3 % by mass, most preferably 1 to 2.5 % by mass.

The content of low-molecular weight components having a molecular weight of 1,000 or less may be controlled by regulating melt polymerization conditions such as the temperature or pressure at which the polyamide resin is polymerized or the rate of dropwise addition of the diamine. Especially, it may be controlled at any proportion by depressurizing the inside of the reactor at a late stage of melt polymerization to remove the low-molecular weight components. Alternatively, the low-molecular weight components may be removed by extracting the polyamide resin obtained by melt polymerization with hot water or the low-molecular weight components may be removed by further solid state polymerization under reduced pressure after melt polymerization. During the solid state polymerization, the low-molecular weight components may be controlled at any content by regulating the temperature or the degree of vacuum. Alternatively, the content may also be controlled by adding a low-molecular weight component having a molecular weight of 1,000 or less to the polyamide resin later.

The amount of components having a molecular weight of 1,000 or less may be determined by gel permeation chromatography (GPC) as a relative value equivalent to the amount of poly(methyl methacrylate) (PMMA) used as a standard by employing the instrument "HLC-8320GPC" available from Tosoh Corporation and two "TSK gel Super HM-H" columns eluting with 10 mmol/l sodium trifluoroacetate in hexafluoroisopropanol (HFIP) under conditions of a resin concentration of 0.02 % by mass, a column temperature of 40 °C, a flow rate of 0.3 ml/min and detection with a refractive index detector (RI). A calibration curve is generated from measurements of six PMMA standards dissolved in HFIP.

Further details of thermoplastic resins may be found in the description at paragraphs 0011 to 0028 of JPA2014-074162.

The amount of the thermoplastic resin in the fiber-reinforced resin sheet is preferably 20 to 98 % by weight, more preferably 25 to 80 % by weight, even more preferably 30 to 70 % by weight. Only one or more than one thermoplastic resin may be used. When two or more thermoplastic resins are used, the total amount should preferably be in the ranges indicated above. Especially, the proportion of the resin which belongs to a similar type to that of the resin contained in the resin composition for LDS described herein later among all thermoplastic resins contained in the fiber-reinforced resin sheet is preferably 60 % by weight or more, more preferably 80 % by weight or more. When it is in such ranges, the advantages of the present invention are achieved more effectively. Even if it is outside the ranges indicated above, the advantages are achieved sufficiently so far as morphology shows that the matrix (i.e., the sea portion of the sea-island structure) belongs to the similar type.

Further, the fiber-reinforced resin sheet used in the present invention also comprises a fiber impregnated with a thermoplastic resin composition containing a thermoplastic resin as a major component.

Components other than the thermoplastic resin that the thermoplastic resin composition may contain include additives such as elastomers, talc, mold release agents, antioxidants, stabilizers such as heat stabilizers, hydrolysis resistance improvers, weather stabilizers, matting agents, UV absorbers, nucleating agents, plasticizers, dispersing agents, flame retardants, antistatic agents, discoloration inhibitors, anti-gelling agents, colorants, mold release agents and the like. Detailed information about these additives may be found in the description at paragraphs 0130 to 0155 of Japanese Patent No. 4894982. Further, elastomers, talc and mold release agents may be found in the description of these components in the resin composition for LDS herein later, and also cover the same preferred ranges.

These components are preferably contained in an amount of 20 % by weight or less of the thermoplastic resin composition.

### <<Fiber>>

Fibers used in the present invention include glass fibers, carbon fibers, plant fibers (including kenaf, bamboo fibers and the like), alumina fibers, boron fibers, ceramic fibers, metallic fibers (steel fibers and the like), aramid fibers, polyoxymethylene fibers, aromatic polyamide fibers, polyparaphenylene benzobisoxazole fibers, ultra-high molecular weight polyethylene fibers and the like. Among them, carbon fibers and/or glass fibers are preferred, more preferably glass fibers.

These fibers preferably consist of, for example, simply a monofilament or an assembly of unidirectionally aligned or crossed multifilaments. Further, prepregs composed of layers of these fibers into which a binder or the like impregnates also preferably used.

The fibers preferably have an average fiber diameter of 1 to 100 um, more preferably 3 to 50 um, even more preferably 4 to 20 um, especially preferably 5 to 10 um. When they have an average fiber diameter in these ranges, they are easy to process. It should be noted that the average fiber diameter may be measured by observation with a scanning electron microscope (SEM) or the like. In the present invention, randomly sampled 50 or more individual fibers are measured for their length to calculate the number average fiber diameter.

The fibers preferably bear a functional group reactive with the thermoplastic resin on their surface to improve the wettability and surface adhesion to the thermoplastic resin.

Examples of fibers bearing a functional group reactive with the thermoplastic resin preferably include those having been surface-treated with a surface-treating agent or a sizing agent.

Surface-treating agents include functional compounds such as epoxy compounds, acrylic compounds, isocyanate compounds, silane compounds, titanate compounds and the like, specifically silane coupling agents, titanate coupling agents and the like, preferably silane coupling agents.

Silane coupling agents include trialkoxy or triaryloxysilane compounds such as aminopropyltriethoxysilane, phenylaminopropyltrimethoxysilane, glycidylpropyltriethoxysilane, methacryloxypropyltrimethoxysilane, and vinyltriethoxysilane; ureido silanes, sulfide silanes, vinyl silanes, imidazole silanes and the like.

Sizing agents preferably include epoxy resins such as bisphenol A epoxy resins; and epoxy acrylate resins containing an acrylate or methacrylate group in one molecule also known as vinyl ester resins such as bisphenol A vinyl ester resins, novolac vinyl ester resins, and brominated vinyl ester resins. Urethane-modified epoxy resins and vinyl ester resins may also be included.

The amount of the fiber in the fiber-reinforced resin sheet is preferably 20 to 80 % by weight, more preferably 30 to 70 % by weight of the fiber-reinforced resin sheet.

Further, the thermoplastic resin and the fiber preferably represent 80 % by weight or more of the components of the fiber-reinforced resin sheet.

### <<Structure of the fiber-reinforced resin sheet>>

In the fiber-reinforced resin sheet, the fiber is regularly arranged, has been impregnated with a thermoplastic resin or a thermoplastic resin composition containing a thermoplastic resin as a major component (hereinafter sometimes referred to as a "thermoplastic resin or the like").

An example of a method for impregnating a fiber with a thermoplastic resin or the like involves laminating the fiber and the thermoplastic resin or the like and thermally processing them. The shape of the thermoplastic resin or the like with which the fiber is impregnated is not specifically limited, and it may be employed in the form of a film, fiber, powder, molten state or fluid or the like. In the present invention, a molten thermoplastic resin or the like is preferably extruded onto fibers aligned at equal distances to impregnate them with it. The resulting fiber-reinforced resin sheet may be directly used or a laminate of such sheets may be adjusted to satisfy desired thickness and strength by application of heat and pressure. In the latter case, the sheets are preferably laminated in such a manner that fibers cross at right angles. When such a structure is chosen, the resulting molded article tends to have more improved mechanical strength.

The fiber-reinforced resin sheet has a thickness of 0.01 to 5 mm, more preferably 0.05 to 1 mm, even more preferably 0.1 to 0.8 mm.

### <Resin composition for LDS>

The resin composition for LDS used in the present invention comprises a thermoplastic resin which belongs to a similar type to that of the thermoplastic resin contained in the fiber-reinforced resin sheet and an LDS additive.

### «Thermoplastic resin»

The resin composition for LDS used in the present invention comprises a thermoplastic resin which belongs to a similar type to that of the thermoplastic resin contained in the fiber-reinforced resin sheet. The thermoplastic resin contained in the sheet and the thermoplastic resin contained in the composition are, respectively: a polyamide resin and a polyamide resin, a polyester resin and a polyester resin, a polyolefin resin and a polyolefin resin, a polypropylene resin and a polypropylene resin, a polyethylene resin and a polyethylene resin, an acrylic resin and an acrylic resin, a styrene resin and a styrene resin, a polyamide resin and a polyurethane resin.

In the present invention, the proportion of the thermoplastic resin which belongs to the similar type among the resin components contained in the resin composition for LDS is preferably 80 % by weight or more, more preferably 90 % by weight or more. Further, the resin composition for LDS may contain two or more thermoplastic resins. In such cases, all of the two or more resins are preferably thermoplastic resins of the similar type.

The amount of the thermoplastic resin contained in the resin composition for LDS is preferably 30 % by weight or more, more preferably 35 % by weight or more, even more preferably 35 to 70 % by weight in total.

### <<LDS additive>>

The resin composition for LDS comprises an LDS additive. As used herein, the term "LDS additive" refers to a compound that allows a thermoplastic resin (for example, each polyamide resin synthesized in the Examples described herein later) to be plated with a metal when 10 parts by weight of the compound as a possible LDS additive is added per 100 parts by weight of the resin and the resin is irradiated with a YAG laser beam having a wavelength of 1064 nm at an output power of 13 W, a frequency of 20 kHz, and a scanning speed of 2 m/s, and then subjected to a plating process to apply the metal on the surface irradiated with the laser beam in the electroless plating bath MID Copper 100XB Strike from MacDermid. The LDS additive used in the present invention may be synthesized or commercially available. In addition to commercially available products sold for use as LDS additives, those sold for other purposes may also be used so far as they meet the requirements for the LDS additive in the present invention. A single LDS additive may be used or two or more LDS additives may be used in combination.

The LDS additive used in the present invention is not specifically limited, but examples that may be used include, for example, an oxide containing antimony and tin, an oxide containing phosphorus and tin, or an oxide containing antimony, phosphorus and tin, preferably an oxide containing antimony and tin. When such an oxide containing antimony and tin is used as the LDS additive, platability may be more improved. Another example includes a conductive oxide containing at least two metals and having a resistivity of 5 × 10³ Ω.cm or less as described herein later.

When the LDS additive used in the present invention is an oxide containing antimony and tin, the content of tin is more preferably higher than the content of antimony, e.g., the content of tin is more preferably 80 % by weight or more based on the total amount of tin and antimony. Such LDS additives include, for example, a tin oxide doped with antimony, and a tin oxide doped with an antimony oxide. For example, the amount of antimony contained in the oxide containing antimony and tin is preferably 1 to 20 % by weight.

Preferred embodiments of the LDS additive used in the present invention are described below. However, it should be understood that the LDS additive used in the present invention is not limited to these embodiments.

A first embodiment of the LDS additive used in the present invention is an embodiment wherein metal components contained in the LDS additive comprise 90 % by weight or more of tin, 5 % by weight or more of antimony, and lead and/or copper as minor components. In the first embodiment, the LDS additive more preferably comprises 90 % by weight or more of tin, 5 to 9 % by weight of antimony, 0.01 to 0.1 % by weight of lead, and 0.001 to 0.01 % by weight of copper.

More specifically, the LDS additive used in the first embodiment preferably comprises 90 % by weight or more of a tin oxide, and 3 to 8 % by weight of an antimony oxide, and preferably further comprises 0.01 to 0.1 % by weight of a lead oxide and/or 0.001 to 0.01 % by weight of a copper oxide. A more preferred embodiment is an embodiment that uses an LDS additive comprising 90 % by weight or more of a tin oxide, 3 to 8 % by weight of an antimony oxide, 0.01 to 0.1 % by weight of a lead oxide, and 0.001 to 0.01 % by weight of a copper oxide. A still more preferred embodiment is an embodiment that uses an LDS additive comprising 93 % by weight or more of a tin oxide, 4 to 7 % by weight of an antimony oxide, 0.01 to 0.05 % by weight of a lead oxide and 0.001 to 0.006 % by weight of a copper oxide.

In addition to lead and/or copper, the LDS additive used in the first embodiment may contain minor amounts of other metals. Examples of other metals include indium, iron, cobalt, nickel, zinc, cadmium, silver, bismuth, arsenic, manganese, chromium, magnesium, calcium and the like. These metals may exist as their oxides. These metals are each preferably contained in an amount of 0.001 % by weight or less of the metal components contained in the LDS additive.

A second embodiment of the LDS additive used in the present invention is an embodiment comprising at least one member selected from mica, silicon dioxide and titanium oxide in addition to an oxide containing antimony and tin. Preferred examples used in the second embodiment include an LDS additive comprising 40 to 45 % by weight of an oxide containing antimony and tin and 50 to 60 % by weight in total of mica and silicon dioxide, or an LDS additive comprising 35 to 53 % by weight of an oxide containing antimony and tin, 35 to 53 % by weight in total of mica and silicon dioxide, and 11 to 15 % by weight of titanium dioxide.

The LDS additive used in a third embodiment of the present invention preferably comprises a conductive oxide containing at least two metals and having a resistivity of 5 × 10³ Ω.cm or less. The resistivity of the conductive oxide is preferably 8 x 10² Ω.cm or less, more preferably 7 × 10² Ω.cm or less, even more preferably 5 × 10² Ω.cm or less. The lower limit is not specifically defined, but may be, for example, 1 × 10¹ Ω.cm or more, even 1 × 10² Ω.cm or more.

As used herein, the resistivity of the conductive oxide typically refers to the powder resistivity, which may be measured with the tester "model 3223" from Yokogawa Electric Corporation by loading 10 g of fine powder of the conductive oxide into a cylinder having an inside diameter of 25 mm coated with Teflon^{®} on the inner surface and pressurizing it at 100 kg/cm² (packing density 20 %) .

The LDS additive used in the third embodiment is not specifically limited so far as it comprises a conductive oxide having a resistivity of 5 × 10³ Ω.cm or less, but preferably contains at least two metals, specifically contains a metal of Group n (wherein n is an integer of 3 to 16) and a metal of Group n+1 of the periodic table. Preferably, n is an integer of 10 to 13, more preferably 12 or 13.

The LDS additive used in the third embodiment preferably contains 15 mol% or less, more preferably 12 mol% or less, especially preferably 10 mol% or less of one of a metal of Group n (wherein n is an integer of 3 to 16) and a metal of Group n+1 of the periodic table provided that the total amount of both metals in the LDS additive is 100 mol%. The lower limit is not specifically defined, but should be 0.0001 mol% or more. When two or more metals are contained in such ranges, platability may be improved. In the present invention, an oxide of a metal of Group n doped with a metal of Group n+1 is especially preferred.

Further, the metal of Group n and the metal of Group n+1 of the periodic table described above preferably represent 98 % by weight or more of the metal components contained in the LDS additive used in the third embodiment.

Metals of Group n of the periodic table include, for example, metals of Group 3 (scandium, yttrium), Group 4 (titanium, zirconium and the like), Group 5 (vanadium, niobium and the like), Group 6 (chromium, molybdenum and the like), Group 7 (manganese and the like), Group 8 (iron, ruthenium and the like), Group 9 (cobalt, rhodium, iridium and the like), Group 10 (nickel, palladium, platinum), Group 11 (copper, silver, gold and the like), Group 12 (zinc, cadmium and the like), Group 13 (aluminum, gallium, indium and the like), Group 14 (germanium, tin and the like), Group 15 (arsenic, antimony and the like), and Group 16 (selenium, tellurium and the like), as well as oxides of these metals and the like. Among others, metals of Group 12 (n=12) or oxides thereof are preferred, more preferably zinc.

Metals of Group n+1 of the periodic table include, for example, metals of Group 4 (titanium, zirconium and the like), Group 5 (vanadium, niobium and the like), Group 6 (chromium, molybdenum and the like), Group 7 (manganese and the like), Group 8 (iron, ruthenium and the like), Group 9 (cobalt, rhodium, iridium and the like), Group 10 (nickel, palladium, platinum), Group 11 (copper, silver, gold and the like), Group 12 (zinc, cadmium and the like), Group 13 (aluminum, gallium, indium and the like), Group 14 (germanium, tin and the like), Group 15 (arsenic, antimony and the like), and Group 16 (selenium, tellurium and the like), as well as oxides of these metals and the like. Among others, metals of Group 13 (n+1=13) or oxides thereof are preferred, more preferably aluminum or gallium, even more preferably aluminum.

The LDS additive used in the third embodiment may contain metals other than the conductive metal oxide. Examples of metals other than the conductive oxide include antimony, titanium, indium, iron, cobalt, nickel, cadmium, silver, bismuth, arsenic, manganese, chromium, magnesium, calcium and the like. These metals may exist as their oxides. These metals are each preferably contained in an amount of 0.01 % by weight or less of the LDS additive.

The LDS additive preferably has a particle size of 0.01 to 100 um, more preferably 0.05 to 10 um. When it has such a feature, the homogeneity of the state of plated surfaces tends to be more improved.

The amount of the LDS additive contained in the resin composition for LDS is preferably 1 to 30 parts by weight, more preferably 2 to 25 parts by weight, even more preferably 5 to 20 parts by weight per 100 parts by weight of the thermoplastic resin. When the LDS additive is contained in an amount within such ranges, the platability of the resulting resin molded article may be more improved. Further, plated layers may be formed with smaller amounts by combining it with talc, as described herein later. When two or more LDS additives are contained, the total amount should preferably be in the ranges defined above.

### <<Glass fiber>>

Preferably, the resin composition for LDS further comprises a glass fiber. The mechanical strength of the resulting resin molded article may be improved by incorporating a glass fiber. In addition, dimensional precision may also be more improved by incorporating a glass fiber. A single glass fiber may be used or two or more glass fibers may be used in combination. The glass fiber preferably used in the present invention preferably has an average diameter of 20 um or less, more preferably 1 to 15 um to further improve the balance among physical properties (strength, rigidity, rigidity after heating, impact strength) and to further reduce molding warpage. Further, glass fibers that are generally used often typically have a circular section, but the present invention is not specifically limited to such a sectional shape, and those having a cocoon-shaped, elliptical or rectangular section, for example, may also be used.

The glass fiber is not specifically limited to any length, and may be used by selecting it from long fiber bundles (rovings), short fiber bundles (chopped strands) and the like. Such glass fiber bundles are each preferably composed of 100 to 5000 fibers. Further, the glass fiber may be a milled strand known as so-called milled fiber or glass powder so far as it has at least a minimum desired length (for example, an average fiber length of 0.1 mm or more) in the composition of the present invention after it has been kneaded or it may also be a single continuous strand called sliver. The glass used as the raw material for the glass fiber is also preferably an alkali-free composition such as E-glass, C-glass, S-glass or the like, among which E-glass is preferably used in the present invention.

Preferably, the glass fiber has been surface-treated with a silane coupling agent such as γ-methacryloxypropyltrimethoxysilane, γ-glycidoxypropyltrimethoxysilane, γ-aminopropyltriethoxysilane or the like, which is typically deposited in an amount of 0.01 to 1 % by weight based on the weight of the glass fiber. Further, it may also be used after it has been surface-treated as appropriate with a lubricant such as a fatty acid amide compound or a silicone oil; an antistatic agent such as a quaternary ammonium salt; a resin having a film-forming ability such as an epoxy resin, a urethane resin or the like; or a mixture of a resin having a film-forming ability with a heat stabilizer, a flame retardant and the like.

The amount of the glass fiber contained in the resin composition for LDS is preferably 10 to 150 parts by weight, more preferably 10 to 130 parts by weight, even more preferably 20 parts by weight or more and less than 100 parts by weight per 100 parts by weight of the thermoplastic resin.

In the resin composition for LDS, the thermoplastic resin and the glass fiber typically account for 60 % by weight or more of all components.

### <Elastomer>

The resin composition for LDS may further contain an elastomer. Thus, the impact resistance of the resin composition for LDS may be improved by incorporating an elastomer.

The elastomer used in the present invention is preferably a graft copolymer obtained by graft copolymerization of a rubber component and a monomer component copolymerizable therewith. The graft copolymer may be obtained by any process such as mass polymerization, solution polymerization, suspension polymerization, emulsion polymerization or the like, and may be obtained by single-stage or multistage graft copolymerization.

The rubber component typically has a glass transition temperature of 0 °C or less, preferably -20 °C or less, more preferably -30 °C or less. Specific examples of rubber components include polybutadiene rubbers, polyisoprene rubbers; poly(alkyl acrylate) rubbers such as poly(butyl acrylate), poly(2-ethylhexyl acrylate), and butyl acrylate/2-ethylhexyl acrylate copolymers; silicone rubbers such as polyorganosiloxane rubbers; butadiene-acrylic composite rubbers; IPN (Interpenetrating Polymer Network) composite rubbers composed of a polyorganosiloxane rubber and a poly(alkyl acrylate) rubber; styrene-butadiene rubbers; ethylene-α-olefin rubbers such as ethylene-propylene rubbers, ethylene-butene rubbers, and ethylene-octene rubbers; ethylene-acrylic rubbers; fluororubbers; and the like. These may be used alone or as a mixture of two or more of them. Among them, polybutadiene rubbers, poly(alkyl acrylate) rubbers, polyorganosiloxane rubbers, IPN composite rubbers composed of a polyorganosiloxane rubber and a poly(alkyl acrylate) rubber, and styrene-butadiene rubbers are preferred to improve mechanical properties and surface appearance.

Specific examples of monomer components that may be graft-copolymerized with the rubber components include aromatic vinyl compounds, vinyl cyanide compounds, (meth)acrylic acid ester compounds, (meth)acrylic acid compounds, epoxy-containing (meth)acrylic acid ester compounds such as glycidyl (meth)acrylate; maleimide compounds such as maleimide, N-methylmaleimide and N-phenylmaleimide; α, β-unsaturated carboxylic acid compounds such as maleic acid, phthalic acid and itaconic acid and their anhydrides (e.g., maleic anhydride and the like), etc. These monomer components may be used alone or as a combination of two or more of them. Among them, aromatic vinyl compounds, vinyl cyanide compounds, (meth)acrylic acid ester compounds, and (meth)acrylic acid compounds are preferred to improve mechanical properties and surface appearance, more preferably (meth)acrylic acid ester compounds. Specific examples of (meth)acrylic acid ester compounds include methyl (meth)acrylate, ethyl (meth)acrylate, butyl (meth)acrylate, cyclohexyl (meth)acrylate, octyl (meth)acrylate and the like.

The graft copolymer obtained by copolymerizing a rubber component is preferably a core-shell graft copolymer to improve impact resistance and surface appearance. Among others, especially preferred is a core-shell graft copolymer comprising a core layer consisting of at least one rubber component selected from polybutadiene-containing rubbers, polybutyl acrylate-containing rubbers, polyorganosiloxane rubbers, and IPN composite rubbers composed of a polyorganosiloxane rubber and a poly(alkyl acrylate) rubber, and a shell layer formed by copolymerizing a (meth) acrylic acid ester around the core layer. The core-shell graft copolymer preferably contains 40 % by mass or more, more preferably 60 % by mass or more of the rubber component. Further, it preferably contains 10 % by mass or more of (meth) acrylic acid. It should be noted that the core-shell as used herein covers the concept widely encompassing compounds obtained by graft polymerization of a rubber component around a core-forming part though the core layer and the shell layer may not necessarily be definitely demarcated.

Preferred specific examples of these core-shell graft copolymers include methyl methacrylate-butadiene-styrene copolymers (MBS), methyl methacrylate-acrylonitrile-butadiene-styrene copolymers (MABS), methyl methacrylate-butadiene copolymers (MB), methyl methacrylate-acrylic rubber copolymers (MA), methyl methacrylate-acrylic rubber-styrene copolymers (MAS), methyl methacrylate-acrylic/butadiene rubber copolymers, methyl methacrylate-acrylic/butadiene rubber-styrene copolymers, methyl methacrylate-(acrylic/silicone IPN rubber) copolymers, styrene-ethylene-butadiene-styrene copolymers and the like. Such rubber polymers may be used alone or as a combination of two or more of them.

The amount of the elastomer optionally contained in the resin composition for LDS is preferably 0.1 to 40 % by weight, more preferably 0.5 to 25 % by weight, even more preferably 1 to 10 % by weight of the total amount of the resin composition for LDS.

### <Talc>

The resin composition for LDS may further contain talc. The incorporation of talc may improve dimensional stability and product appearance, and also improve the platability of the resulting resin molded article even if the LDS additive is added in smaller amounts so that the resin molded article may be successfully plated. Talc may be used after it has been surface-treated with at least one of compounds selected from polyorganohydrogen siloxanes and organopolysiloxanes. In this case, the amount of the siloxane compounds deposited on talc is preferably 0.1 to 5 % by weight of talc.

The amount of talc optionally contained in the resin composition for LDS is preferably 0.01 to 10 parts by weight, more preferably 0.05 to 8 parts by weight, even more preferably 0.5 to 5 parts by weight per 100 parts by weight of the resin composition for LDS. When talc has been surface-treated with a siloxane compound, the amount of talc surface-treated with the siloxane compound should preferably fall within the ranges defined above.

### <Mold release agent>

The resin composition for LDS may further contain a mold release agent. The mold release agent is mainly used to improve productivity during molding of the resin composition for LDS. Mold release agents include, for example, aliphatic carboxylic acid amides, aliphatic carboxylic acids, esters of aliphatic carboxylic acids and alcohols, aliphatic hydrocarbon compounds having a number average molecular weight of 200 to 15000, polysiloxane silicone oils and the like. Among these mold release agents, carboxylic acid amide compounds are especially preferred.

Aliphatic carboxylic acid amides include, for example, compounds obtained by a dehydration reaction of a higher aliphatic monocarboxylic acid and/or polybasic acid with a diamine.

Higher aliphatic monocarboxylic acids preferably include saturated aliphatic monocarboxylic acids and hydroxycarboxylic acids containing 16 or more carbon atoms such as palmitic acid, stearic acid, behenic acid, montanic acid, 12-hydroxystearic acid and the like.

Polybasic acids include, for example, aliphatic dicarboxylic acids such as malonic acid, succinic acid, adipic acid, sebacic acid, pimelic acid and azelaic acid; aromatic dicarboxylic acids such as phthalic acid and terephthalic acid; alicyclic dicarboxylic acids such as cyclohexanedicarboxylic acid, cyclohexylsuccinic acid and the like.

Diamines include, for example, ethylenediamine, 1,3-diaminopropane, 1,4-diaminobutane, hexamethylenediamine, m-xylylenediamine, tolylenediamine, p-xylylenediamine, phenylenediamine, isophoronediamine and the like.

Carboxylic acid amide compounds preferably include compounds obtained by polycondensing stearic acid, sebacic acid and ethylenediamine, more preferably compounds obtained by polycondensing 2 moles of stearic acid, 1 mole of sebacic acid and 2 moles of ethylenediamine. Further, bisamide compounds obtained by reacting a diamine with an aliphatic carboxylic acid such as N,N'-methylenebisstearic acid amide or N,N'-ethylenebisstearic acid amide as well as dicarboxylic acid amide compounds such as N,N'-dioctadecylterephthalic acid amide may also be preferably used.

Aliphatic carboxylic acids include, for example, saturated or unsaturated aliphatic mono-, di- or tricarboxylic acids. The aliphatic carboxylic acids here also include alicyclic carboxylic acids. Among them, preferred aliphatic carboxylic acids are mono- or dicarboxylic acids containing 6 to 36 carbon atoms, more preferably saturated aliphatic monocarboxylic acids containing 6 to 36 carbon atoms. Specific example of such aliphatic carboxylic acids include palmitic acid, stearic acid, caproic acid, capric acid, lauric acid, arachic acid, behenic acid, lignoceric acid, cerotic acid, melissic acid, tetratriacontanoic acid, montanic acid, adipic acid, azelaic acid and the like.

Aliphatic carboxylic acids that may be used in esters of aliphatic carboxylic acids and alcohols include, for example, the aliphatic carboxylic acids listed above. Alcohols include, for example, saturated or unsaturated mono- or polyalcohols. These alcohols may be substituted by a substituent such as a fluorine atom or an aryl group. Among them, saturated mono- or polyalcohols containing 30 or less carbon atoms are preferred, more preferably saturated aliphatic or alicyclic monoalcohols or saturated aliphatic polyalcohols containing 30 or less carbon atoms.

Specific examples of such alcohols include octanol, decanol, dodecanol, stearyl alcohol, behenyl alcohol, ethylene glycol, diethylene glycol, glycerol, pentaerythritol, 2,2-dihydroxyperfluoropropanol, neopentylene glycol, ditrimethylolpropane, dipentaerythritol and the like.

Specific examples of esters of aliphatic carboxylic acids and alcohols include beeswax (a mixture containing myricyl palmitate as a major component), stearyl stearate, behenyl behenate, stearyl behenate, glyceryl monopalmitate, glyceryl monostearate, glyceryl distearate, glyceryl tristearate, pentaerythritol monopalmitate, pentaerythritol monostearate, pentaerythritol distearate, pentaerythritol tristearate, pentaerythritol tetrastearate and the like.

Aliphatic hydrocarbons having a number average molecular weight of 200 to 15,000 include, for example, liquid paraffin, paraffin waxes, microcrystalline waxes, polyethylene waxes, Fischer-Tropsch waxes, α-olefin oligomers containing 3 to 12 carbon atoms and the like. It should be noted that the aliphatic hydrocarbons here also include alicyclic hydrocarbons. Preferably, the aliphatic hydrocarbons have a number average molecular weight of 5,000 or less.

The amount of the mold release agent optionally contained is typically 0.001 parts by weight or more, preferably 0.01 parts by weight or more, and typically 2 parts by weight or less, preferably 1.5 parts by weight or less per 100 parts by weight of the total of the thermoplastic resin and the glass fiber in the resin composition for LDS. When the mold release agent is contained in an amount of 0.001 parts by weight or more per 100 parts by weight of the total of the thermoplastic resin and the glass fiber, releasability may be improved. When the mold release agent is contained in an amount of 2 parts by weight or less per 100 parts by weight of the total of the thermoplastic resin and the glass fiber, a decrease in hydrolysis resistance may be prevented and mold contamination during injection molding may also be prevented.

### <Other additives>

The resin composition for LDS may further contain various additives so far as the advantages of the present invention are not affected. Such additives include pigments (titanium oxides and the like), alkalis, heat stabilizers, flame-retardants, light stabilizers, antioxidants, UV absorbers, dyes/pigments, fluorescent brightening agents, anti-dripping agents, antistatic agents, anti-fogging agents, lubricants, anti-blocking agents, flow improvers, plasticizers, dispersing agents, antibacterial agents and the like. These components may be used alone or as a combination of two or more of them.

### <Processes for preparing the resin composition for LDS>

Any process may be employed for preparing the resin composition for LDS. For example, a process comprises mixing a thermoplastic resin, an LDS additive and a glass fiber by using a mixing means such as a V-blender to prepare a blend in one step, and then melting/kneading the blend in a vented extruder to pelletize it. An alternative process is a two-step kneading process comprising thoroughly mixing the components and the like except for the glass fiber in advance, then melting/kneading the mixture in a vented extruder to prepare pellets, then mixing the pellets with the glass fiber, and finally melting/kneading the mixture in the vented extruder.

Another alternative process comprises thoroughly mixing the components and the like except for the glass fiber in a V-blender or the like to prepare a mixture in advance and feeding this mixture from a first shoot of a vented twin-screw extruder while feeding the glass fiber from a second shoot in the midway of the extruder and melting/kneading the mixture and the glass fiber to prepare pellets.

The screw layout in the kneading zone of the extruder preferably comprises an upstream element for promoting kneading and a downstream element capable of increasing pressure.

Elements for promoting kneading include forward kneading disc elements, neutral kneading disc elements, wide kneading disc elements, and forward mixing screw elements and the like.

The heating temperature during melting/kneading may be typically selected from the range of 180 to 360 °C as appropriate. If the temperature is too high, decomposition gases may be readily released to cause opacification. Thus, the screw layout should desirably be chosen by taking into account shear heating and the like. Further, antioxidants or heat stabilizers are desirably used to inhibit decomposition during kneading and a subsequent molding process.

### <Thermal molding>

The thermal molding conditions in the present invention are appropriately chosen depending on the type of the resin used and other factors, and preferably include a thermal molding temperature in the range from the glass transition point for amorphous resins or the melting point for crystalline resins minus 20 °C to that point plus 80 °C, more preferably in the range from the heat deflection temperature to that temperature plus 50 °C. The heat deflection temperature may be determined by DSC. When a mold is used, for example, the thermal molding temperature corresponds to the mold temperature, which may be in the ranges defined above.

Further, the manufacturing processes of the present invention preferably comprise applying pressure during thermal molding preferably at 1 to 500 kgf/cm², more preferably 3 to 200 kgf/cm². In the present invention, the fiber-reinforced resin sheet and the resin composition for LDS are thermally molded preferably in a weight ratio of 99.5:0.5 to 50:50, more preferably 95:5 to 70:30.

Specific examples of thermal molding processes according to the present invention are described below, but it should be understood that the present invention is not limited to the following examples.

A first embodiment of thermal molding according to the present invention is a process comprising insert molding by injecting the resin composition for LDS composition into a mold containing the fiber-reinforced resin sheet.

Insert molding is a process in which a resin composition for LDS is injection-molded (filled by injection) into the space outside of a fiber-reinforced resin sheet placed in advance in the cavity of a mold having a desired shape for injection molding to give a resin molded article. Further, other layers such as adhesive layers may also be included. Insert molding allows the resin molded article to have improved strength or to be finely embossed.

A second embodiment according to the present invention is a process wherein the resin composition for LDS is a film and the process comprises outsert molding by laminating the film and the fiber-reinforced resin sheet. In this case, the film formed of the resin composition for LDS and the fiber-reinforced resin sheet are laminated and subjected to heat and pressure. The temperature at which they are subjected to heat and pressure may be appropriately chosen, taking into account the melting point of the thermoplastic resin and the like. Moreover, a resin molded article having a desired shape may be obtained if they are subjected to heat and pressure in a mold having the desired shape.

In the second embodiment, the ratio between the thicknesses of the fiber-reinforced resin sheet and the film formed of the resin composition for LDS is preferably 99.9:0.1 to 50:50, more preferably 99:1 to 70:30.

### <Formation of a plated layer>

Next, a process for providing a plated layer is explained with reference to Figure 2.

Figure 2 is a schematic diagram showing a process for plating the surface of a resin molded article 1 by the laser direct structuring technology. In Figure 2, the resin molded article 1 is shown as a flat substrate, but may not necessarily be a flat substrate and instead may be a resin molded article having a partially or totally curved surface. Further, the resin molded article 1 is not limited to an end product but also intended to include various parts.

Then, the process for manufacturing a resin molded article having a plated layer according to the present invention comprises irradiating the resin molded article 1 with a laser beam 2.

The source of the laser beam 2 is not specifically limited, and may be appropriately selected from known lasers such as YAG lasers, excimer lasers, electromagnetic radiation and the like, especially preferably YAG lasers. Further, the wavelength of the laser beam 2 is not specifically limited, either. A preferred wavelength range of the laser beam 2 is 200 nm to 1200 nm, especially preferably 800 to 1200 nm.

Once the resin molded article 1 is irradiated with the laser beam 2, the resin molded article 1 is activated only in the region 3 irradiated with the laser beam 2. A plating solution 4 is applied to the activated resin molded article 1. The plating solution 4 is not specifically limited, and known plating solutions may be widely employed, preferably those containing a metal component such as copper, nickel, gold, silver or palladium, more preferably copper.

The method by which the plating solution 4 is applied to the resin molded article 1 is not specifically limited either, but involves, for example, placing the article into a liquid containing the plating solution. After the plating solution has been applied, a plated layer 5 is formed only in the region of the resin molded article 1 irradiated with the laser beam 2.

According to the processes of the present invention, circuits may be formed at distances of 1 mm or less, or even 150 um or less from each other (and 30 um or more, for example, though the lower limit is not specifically defined). Such circuits are preferably used as antennas for portable electronic devices. Thus, an example of a preferred embodiment of the resin molded article 1 according to the present invention is a resin molded article having a plated layer on its surface for use as a part for portable electronic devices wherein the plated layer has performance as an antenna.

Further information may be found in the descriptions in JPA2011-219620, JPA2011-195820, JPA2011-178873, JPA2011-168705, and JPA2011-148267.

### <Resin molded articles having a plated layer>

The processes of the present invention allow a plated layer to be formed directly on the surfaces of resin molded articles. Thus, the manufacturing processes of the present invention are preferably used to manufacture parts for portable electronic devices having an antenna. Examples of parts for portable electronic devices include internal structures and chassis for electronic organizers, PDAs such as hand-held computers, pagers, cell phones, PHS phones and the like. Especially, they are suitable for manufacturing resin molded articles which are flat parts having an average thickness of 1.2 mm or less excluding ribs (and 0.4 mm or more, for example, though the lower limit is not specifically defined), in particular chassis for portable electronic devices.

### EXAMPLES

The following examples further illustrate the present invention. The scope of the present invention is not limited to the specific examples shown below.

### <Polyamide resin>

### (Synthesis of a polyamide (PAMP10))

In a reaction vessel under a nitrogen atmosphere, sebacic acid was melted by heating and then the temperature was raised to 235 °C while a diamine mixture of p-xylylenediamine (from MITSUBISHI GAS CHEMICAL COMPANY, INC.) and m-xylylenediamine (from MITSUBISHI GAS CHEMICAL COMPANY, INC.) in a molar ratio of 3:7 was gradually added dropwise under pressure (0.35 Mpa) while stirring the contents until the molar ratio of diamine to sebacic acid reached about 1:1. After completion of the dropwise addition, the reaction was continued for 60 minutes to control the amount of components having a molecular weight of 1,000 or less. After completion of the reaction, the contents were collected in the form of strands and pelletized in a pelletizer to give a polyamide hereinafter designated as "PAMP10".

### (Synthesis of a polyamide (PAMP6))

In a reaction vessel under a nitrogen atmosphere, adipic acid (from Rhodia) was melted by heating and then the temperature was raised to 270 °C while a diamine mixture of p-xylylenediamine (from MITSUBISHI GAS CHEMICAL COMPANY, INC.) and m-xylylenediamine (from MITSUBISHI GAS CHEMICAL COMPANY, INC.) in a molar ratio of 3:7 was gradually added dropwise under pressure (0.35 Mpa) while stirring the contents until the molar ratio of diamine to adipic acid reached about 1:1. After completion of the dropwise addition, the pressure was lowered to 0.06 MPa and the reaction was continued for 10 minutes to control the amount of components having a molecular weight of 1,000 or less. Then, the contents were collected in the form of strands and pelletized in a pelletizer to give a polyamide hereinafter designated as "PAMP6".

### <LDS additive>

Black 1G: A copper-chromium oxide (CuCr₂O₄) having an L value of 15.6 (from Shepherd Color Japan, Inc.).

### <Inorganic fiber>

03T-296GH: A glass fiber (from Nippon Electric Glass Co., Ltd.).

### <Talc>

Micron White 5000S (from Hayashi-Kasei Co., Ltd.).

### <Mold release agent>

CS8CP (from NITTO KASEI KOGYO K.K.).

### Example 1

### <Preparation of a fiber-reinforced resin tape>

Using PAMP10 synthesized as described above, a fiber-reinforced resin tape was obtained by the procedure described below. Eighteen rolls of the glass fiber in the form of a roving were aligned at equal distances and the glass fiber was drawn and passed through a spreader so that the glass fiber was spread to a width of 200 mm. The spread glass fiber was introduced between upper and lower two impregnation rollers while PAMP10 melted in a single screw extruder (VS40 from Ikegai Corp) was supplied to impregnate the glass fiber with PAMP10 between the impregnation rollers. Then, the glass fiber was taken up around a cylindrical core while it was cooled with a cooling roller to prepare a tape. The extruder was set at a temperature of 280 °C and a screw speed of 60 rpm, and the take-up rate was 2 mm/min. A tape of 50 m in length, 200 mm in width and 0.25 mm in thickness having a glass content of 50 % by weight was obtained.

### <Procedure for preparing a fiber-reinforced resin sheet>

The fiber-reinforced resin tape obtained as described above was cut into two pieces of 200 mm in width and 200 mm in length, which were laminated at 90 degrees to each other so that the glass fibers cross at right angles, and then placed in a mold heated at a setting temperature, and compression-molded using a press of 100 t. After the compression molding, the mold was cooled to 80 °C by circulating water and then opened to eject a sheet consisting of a two-ply fiber-reinforced resin sheet of 0.5 mm in thickness. Compression molding conditions included a mold temperature of 260 °C and a pressure of 10 kgf/cm² for a compression time of 5 minutes followed by a cooling time of 20 minutes.

### <Preparation of resin pellets (a resin composition for LDS)>

Various components were weighed out in amounts that corresponded to the composition shown in the table below, and all components excluding the glass fiber were blended in a tumbler and the blend was introduced into a twin-screw extruder (TEM-26SS from TOSHIBA MACHINE CO., LTD.) from the rear ends of the screws and melted, and then the glass fiber was fed from a side feeder to prepare resin pellets (a resin composition for LDS). The extruder was operated at a temperature setting of 280 °C and a screw speed of 350 rpm.

**Table 1**

| | | Resin composition for LDS |
|---|---|---|
| Polyamide resin | PAMP10 | 51.7 |
| Glass fiber | 03T-296GH | 40 |
| Talc | MW5000S | 4 |
| LDS additive | Black 1G | 4 |
| Mold release agent | CS-8CP | 0.3 |
| Total | | 100 |

### <Preparation of a sheet-like molded product>

A 100 mm x 100 mm piece was cut out from the fiber-reinforced resin sheet obtained as described above. The cut out piece was inserted into a mold of 100 mm x 100 mm x 2 mm in thickness (having a cavity using a side film gate), and the resin pellets obtained as described above were dried at 120 °C for 4 hours, and then injection-molded using an injection molding machine (100T) from FANUC CORPORATION under the conditions of a cylinder temperature of 280 °C and a mold surface temperature of 110 °C to prepare a sheet-like molded product of 2 mm in thickness in such a manner that the sheet could form the outer layer on one side. Molding conditions were set to fill about 95 % of the cavity in about 0.5 seconds and to run the holding phase at about 80 % of the pressure at the velocity/pressure switch-over point for 10 seconds.

### Example 2

### <Preparation of a thermoplastic resin film for LDS>

The materials of the composition of the resin pellets (the resin composition for LDS) of Example 1 excluding the glass fiber were used to prepare a film in a single screw extruder with a flat die having a width of 150 mm. Film forming conditions included a barrel temperature and a die temperature of 280 °C and a roller temperature of 80 °C to give a film of about 100 um in thickness.

### <Preparation of a sheet-like molded product>

A sheet-like molded product was obtained in a press using a fiber-reinforced resin tape obtained in the same manner as in Example 1 and the thermoplastic resin film for LDS obtained as described above. Specifically, the fiber-reinforced resin tape described above was cut into two pieces of 200 mm in width and 200 mm in length, which were oriented at 90 degrees to each other so that the glass fibers cross at right angles, and then placed in a mold heated at a setting temperature together with the thermoplastic resin film for LDS of 100 um, and compression-molded using a press of 100 t. After the compression molding, the mold was cooled to 80 °C by circulating water and then opened to eject a sheet-like molded product. Compression molding conditions included a mold temperature of 280 °C and a pressure of 100 kgf/cm² for a compression time of 5 minutes followed by a cooling time of 20 minutes.

### Example 3

### <Procedure for preparing a fiber-reinforced resin tape>

The Procedure for preparing a tape in Example 1 was followed except that PAMP10 was replaced by PAMP6.

### <Preparation of a sheet-like molded product>

A sheet-like molded product was obtained in the same manner as in Example 2 except that the fiber-reinforced resin tape obtained as described above was used and the mold temperature during the compression molding of the sheet-like molded product was 270 °C.

### Comparative example 1

A sheet-like molded product was obtained in the same manner as in Example 1 except that a metal sheet of a magnesium plate (0.5 mm in thickness) was used in place of the fiber-reinforced resin sheet.

Specifically, a 100 mm x 100 mm magnesium plate was inserted into a mold of 100 mm x 100 mm x 2 mm in thickness (having a cavity using a side film gate), and the resin pellets obtained as described above were dried at 120 °C for 4 hours, and then injection-molded using an injection molding machine (100T) from FANUC CORPORATION under the conditions of a cylinder temperature of 280 °C and a mold surface temperature of 110 °C to prepare a sheet-like molded product of 2 mm in thickness in such a manner that the sheet could form the outer layer on one side. Molding conditions were set to fill about 95 % of the cavity in about 0.5 seconds and to run the holding phase at about 80 % of the pressure at the velocity/pressure switch-over point for 10 seconds.

### Comparative example 2

The resin pellets (the resin composition for LDS) obtained in Example 1 were dried at 120 °C for 4 hours, and then molded using an injection molding machine (100T) from FANUC CORPORATION under the conditions of a cylinder temperature of 280 °C and a mold surface temperature of 110 °C to form a molded product of 100 mm × 100 mm × 2 mm in thickness (using a film gate). Molding conditions were set to fill about 95 % of the cavity in about 0.5 seconds and to run the holding phase at about 80 % of the pressure at the velocity/pressure switch-over point for 10 seconds.

### Comparative example 3

### <Procedure for preparing a fiber-reinforced resin tape>

A fiber-reinforced resin tape was obtained in the same manner as in Example 3 except that PAMP6 was replaced by polypropylene (NOVATEC PP MA3 from Japan Polypropylene Corporation) and the temperature setting of the extruder was changed to 200 °C in Example 3.

### <Preparation of a sheet-like molded product>

A sheet-like molded product was obtained in the same manner as in Example 2 except that the fiber-reinforced resin tape obtained as described above was used and the mold temperature during the compressing molding of the sheet-like molded product was 170 °C.

### <Impact resistance of the sheet-like molded products>

The sheet-like molded products obtained as described above were evaluated for their impact resistance by a ball drop test. A 100 g weight was dropped from a height of 50 cm and a comparison was made before and after it was dropped.

A: No change was observed before and after the ball was dropped. B: The two materials were found to have been separated at the boundary.

### <Platability (plating appearance)>

A plated layer was formed on a surface of the layer containing the LDS additive of each sheet-like molded product obtained as described above and evaluated for platability. Specifically, an area of 5 mm × 5 mm of the sheet-like molded product was irradiated using the laser irradiation system LP-Z SERIES from SUNX Co., Ltd. (a YAG laser with a wavelength of 1064 nm and a maximum output power of 13 W) at an output power of 80 % for a pulse duration of 20 us (microseconds) at a scanning speed of 4 m/s. This was followed by a plating process using the electroless plating bath MID Copper 100 XB Strike from MacDermid at 60 °C. Plating performance was visually determined from the thickness of the layer of copper deposited in 30 minutes. Evaluation was made as follows. The results are shown in the table below.
A: Good appearance (a thick plated layer has been formed as proved by a deep copper color).
B: Little plating was observed.

### <Shielding properties>

The sheet-like molded products obtained as described above were determined for the reflection of electromagnetic waves at a frequency of 100 MHz according to the KEC method using the Network Analyzer "N5230A" from Agilent Technologies, Inc. to evaluate their electromagnetic shielding properties as follows.
A: less than 20 dB;
B: 20 dB or more.

**Table 2**

| | Example 1 | Example 2 | Example 3 | Comparative example 1 | Comparative example 2 | Comparative example 3 |
|---|---|---|---|---|---|---|
| Sheet | PAMP10-impregnated GF sheet | PAMP10-impregnated GF sheet | PAMP6-impregnated GF sheet | Metal | None | PP-impregnated GF sheet |
| Overmolding | Injection of PAMP10 containing an LDS additive | Compression with a PAMP10 film containing an LDS additive as the outermost layer | Compression with a PAMP10 film containing an LDS additive as the outermost layer | Injection of PAMP10 containing an LDS additive | A film of PAMP10 containing an LDS additive | Compression with a PAMP10 film containing an LDS additive as the outermost layer |
| Impact resistance | A | A | A | A | N.D. | B |
| Platability | A | A | A | A | A | A |
| Shielding properties | A | A | A | B | A | A |

The Examples described above show that sheet-like molded products having high impact resistance, high platability and favorable shielding properties were obtained when a fiber-reinforced resin sheet was thermally molded with a resin composition for LDS (Examples 1 to 3). However, shielding properties were poor when a metal was used in place of the fiber-reinforced resin sheet (Comparative example 1) . When the thermoplastic resin film for LDS was used alone without using a fiber-reinforced resin sheet (Comparative example 2), the sheet-like molded product broke into pieces so that the impact resistance could not be determined. When the resins used in the fiber-reinforced resin sheet and the resin composition for LDS were of different types (Comparative example 3), poor adhesion resulted in poor impact resistance.

### DESCRIPTION OF THE REFERENCE NUMERALS

1, a resin molded article;
2, a laser beam;
3, a laser-irradiated region;
4, a plating solution;
5, a plated layer;
11, a fiber-reinforced resin sheet;
12, a film formed of a resin composition for LDS;
13, a resin molded article.

## Claims

1. A process for manufacturing a resin molded article, comprising thermally molding a sheet which contains a thermoplastic resin and a fiber together with a composition which contains a thermoplastic resin belonging to a similar type to a type of the thermoplastic resin of the sheet, and a laser direct structuring additive, wherein the resin molded article is selected from the group consisting of internal structures and chassis for electronic organizers, PDAs such as hand-held computers, pagers, cell phones and PHS phones and
wherein the thermoplastic resin contained in the sheet and the thermoplastic resin contained in the composition are, respectively: a polyamide resin and a polyamide resin; a polyester resin and a polyester resin; a polyolefin resin and a polyolefin resin; a polypropylene resin and a polypropylene resin; a polyethylene resin and a polyethylene resin; an acrylic resin and an acrylic resin; a styrene resin and a styrene resin; or a polyamide resin and a polyurethane resin,
wherein the amount of an LDS additive in the fiber-reinforced resin sheet is 0.1 % by weight or less of the sheet;
wherein the fiber is regularly arranged in the sheet;
wherein the fiber is impregnated with the thermoplastic resin contained in the sheet;
and wherein the fiber-reinforced resin sheet has a thickness of 0.01 to 5 mm.

2. The process for manufacturing a resin molded article according to claim 1, comprising insert molding by injecting the composition into a mold containing the sheet.

3. The process for manufacturing a resin molded article according to claim 1, wherein the composition is a film and the process comprises outsert molding by laminating the film and the sheet, wherein the film formed of the composition and the fiber-reinforced resin sheet are laminated and subjected to heat and pressure.

4. The process for manufacturing a resin molded article according to any one of claims 1 to 3, wherein the fiber is at least one of carbon fibers and glass fibers.

5. The process for manufacturing a resin molded article according to any one of claims 1 to 4, wherein the thermoplastic resin contained in the composition is a polyamide resin containing an aromatic ring in its molecule wherein the proportion of the carbon atoms of the aromatic ring in the molecule of the polyamide resin is 30 mol% or more.

6. The process for manufacturing a resin molded article according to any one of claims 1 to 5, wherein the amount of the LDS additive contained in the composition is 1 to 30 parts by weight per 100 parts by weight of the thermoplastic resin.

7. A process for manufacturing a resin molded article having a plated layer, comprising further irradiating a surface of a resin molded article obtained by the process for manufacturing a resin molded article according to any one of claims 1 to 6 with a laser beam, and then applying a metal to form a plated layer.

8. The process for manufacturing a resin molded article having a plated layer according to claim 7, wherein the plated layer is a copper plated layer.

9. A resin molded article obtained by the manufacturing process according to any one of claims 1 to 5 or a resin molded article having a plated layer obtained by the process for manufacturing a resin molded article having a plated layer according to claim 7, wherein the resin molded article is selected from the group consisting of internal structures and chassis for electronic organizers, PDAs such as hand-held computers, pagers, cell phones and PHS phones.

## Patentansprüche

1. Verfahren zum Herstellen eines Harzformartikels, umfassend ein thermisches Formen einer Lage, die ein thermoplastisches Harz und eine Faser enthält, zusammen mit einer Zusammensetzung, die ein thermoplastisches Harz, das zu einer ähnlichen Art wie eine Art des thermoplastischen Harzes der Lage gehört, und ein Laserdirektstrukturierungsadditiv enthält, wobei der Harzformartikel aus der Gruppe ausgewählt ist, bestehend aus internen Strukturen und einem Gehäuse für elektronische Organizer, PDAs, wie Handheld-Computer, Pager, Mobiltelefone und PHS-Telefone, und wobei das thermoplastische Harz, das in der Lage enthalten ist, und das thermoplastische Harz, das in der Zusammensetzung enthalten ist, jeweils sind: ein Polyamidharz und ein Polyamidharz; ein Polyesterharz und ein Polyesterharz; ein Polyolefinharz und ein Polyolefinharz; ein Polypropylenharz und ein Polypropylenharz; ein Polyethylenharz und ein Polyethylenharz; ein Acrylharz und ein Acrylharz; ein Styrolharz und ein Styrolharz; oder ein Polyamidharz und ein Polyurethanharz, wobei die Menge eines LDS-Additivs in der faserverstärkten Harzlage 0,1 Gew.-% oder weniger der Lage beträgt;
wobei die Faser regelmäßig in der Lage angeordnet ist;
wobei die Faser mit dem thermoplastischen Harz imprägniert ist, das in der Lage enthalten ist;
und wobei die faserverstärkte Harzlage eine Dicke von 0,01 bis 5 mm aufweist.

2. Verfahren zum Herstellen eines Harzformartikels nach Anspruch 1, umfassend ein Umspritzen durch ein Einspritzen der Zusammensetzung in eine Form, die die Lage enthält.

3. Verfahren zum Herstellen eines Harzformartikels nach Anspruch 1, wobei die Zusammensetzung eine Folie ist und das Verfahren ein Outsert-Formen durch ein Laminieren der Folie und der Lage umfasst, wobei die Folie, die aus der Zusammensetzung ausgebildet ist, und die faserverstärkte Harzlage laminiert und einer Wärme und einem Druck ausgesetzt werden.

4. Verfahren zum Herstellen eines Harzformartikels nach einem der Ansprüche 1 bis 3, wobei die Faser mindestens eine von Kohlefasern und Glasfasern ist.

5. Verfahren zum Herstellen eines Harzformartikels nach einem der Ansprüche 1 bis 4, wobei das thermoplastische Harz, das in der Zusammensetzung enthalten ist, ein Polyamidharz ist, das einen aromatischen Ring in seinem Molekül enthält, wobei der Anteil der Kohlenstoffatome des aromatischen Rings in dem Molekül des Polyamidharzes 30 Mol-% oder mehr beträgt.

6. Verfahren zum Herstellen eines Harzformartikels nach einem der Ansprüche 1 bis 5, wobei die Menge des LDS-Additivs, das in der Zusammensetzung enthalten ist, 1 bis 30 Gewichtsteile pro 100 Gewichtsteile des thermoplastischen Harzes beträgt.

7. Verfahren zum Herstellen eines Harzformartikels, der eine plattierte Schicht aufweist, umfassend ferner ein Bestrahlen einer Oberfläche eines Harzformartikels, der durch das Verfahren zum Herstellen eines Harzformartikels nach einem der Ansprüche 1 bis 6 mit einem Laserstrahl erhalten wird, und dann ein Aufbringen eines Metalls, um eine plattierte Schicht auszubilden.

8. Verfahren zum Herstellen eines Harzformartikels, der eine plattierte Schicht aufweist, nach Anspruch 7, wobei die plattierte Schicht eine kupferplattierte Schicht ist.

9. Harzformartikel, der durch das Herstellungsverfahren nach einem der Ansprüche 1 bis 5 erhalten wird, oder Harzformartikel, der eine plattierte Schicht aufweist, die durch das Verfahren zum Herstellen eines Harzformartikels, der eine plattierte Schicht aufweist, nach Anspruch 7 erhalten wird, wobei der Harzformartikel aus der Gruppe ausgewählt ist, bestehend aus internen Strukturen und dem Gehäuse für elektronische Organizer, PDAs, wie Handheld-Computer, Pager, Mobiltelefone und PHS-Telefone.

## Revendications

1. Procédé de fabrication d'un article moulé en résine, comprenant le moulage thermique d'une feuille qui contient une résine thermoplastique et une fibre conjointement avec une composition qui contient une résine thermoplastique appartenant à un type similaire à un type de résine thermoplastique de la feuille, et un additif structuration directe au laser, dans lequel l'article moulé en résine est choisi dans le groupe constitué de structures internes et de châssis pour organisateurs électroniques, des PDA tels que des ordinateurs de poche, des téléavertisseurs, des téléphones portables et des téléphones PHS et
dans lequel la résine thermoplastique contenue dans la feuille et la résine thermoplastique contenue dans la composition sont respectivement : une résine polyamide et une résine polyamide ; une résine polyester et une résine polyester ; une résine polyoléfinique et une résine polyoléfinique ; une résine polypropylène et une résine polypropylène ; une résine de polyéthylène et une résine de polyéthylène ; une résine acrylique et une résine acrylique ; une résine de styrène et une résine de styrène ; ou une résine polyamide et une résine polyuréthane,
dans lequel la quantité d'un additif LDS dans la feuille de résine renforcée par des fibres étant de 0,1 % en poids ou moins de la feuille ;
dans lequel la fibre est régulièrement disposée dans la feuille ;
dans lequel la fibre est imprégnée de la résine thermoplastique contenue dans la feuille ;
et dans lequel la feuille de résine renforcée par des fibres a une épaisseur de 0,01 à 5 mm.

2. Procédé de fabrication d'un article moulé en résine selon la revendication 1, comprenant le moulage par insert par injection de la composition dans un moule contenant la feuille.

3. Procédé de fabrication d'un article moulé en résine selon la revendication 1, dans lequel la composition est un film et le procédé comprend un moulage extérieur par stratification du film et de la feuille, dans lequel le film formé de la composition et la feuille de résine renforcée par des fibres sont stratifiés et soumis à la chaleur et à la pression.

4. Procédé de fabrication d'un article moulé en résine selon l'une quelconque des revendications 1 à 3, dans lequel la fibre est au moins l'une des fibres de carbone et des fibres de verre.

5. Procédé de fabrication d'un article moulé en résine selon l'une quelconque des revendications 1 à 4, dans lequel la résine thermoplastique contenue dans la composition est une résine polyamide contenant un cycle aromatique dans sa molécule, dans lequel la proportion des atomes de carbone du cycle aromatique dans la molécule de résine polyamide est de 30 % en mole ou plus.

6. Procédé de fabrication d'un article moulé en résine selon l'une quelconque des revendications 1 à 5, dans lequel la quantité d'additif LDS contenue dans la composition est de 1 à 30 parties en poids pour 100 parties en poids de résine thermoplastique.

7. Procédé de fabrication d'un article moulé en résine ayant une couche plaquée, comprenant en outre l'irradiation d'une surface d'un article moulé en résine obtenu par le procédé de fabrication d'un article moulé en résine selon l'une quelconque des revendications 1 à 6 avec un faisceau laser, puis l'application d'un métal pour former une couche plaquée.

8. Procédé de fabrication d'un article moulé en résine ayant une couche plaquée selon la revendication 7, dans lequel la couche plaquée est une couche plaquée cuivre.

9. Article moulé en résine obtenu par le procédé de fabrication selon l'une quelconque des revendications 1 à 5 ou article moulé en résine ayant une couche plaquée obtenu par le procédé de fabrication d'un article moulé en résine ayant une couche plaquée selon la revendication 7, dans lequel l'article moulé en résine est sélectionné dans le groupe constitué de structures internes et de châssis pour organisateurs électroniques, des PDA tels que des ordinateurs de poche, des téléavertisseurs, des téléphones portables et des téléphones PHS.
